# EUROPÄISCHE PATENTSCHRIFT

(11) **EP 1 114 754 B1**
(45) Veröffentlichungstag und Bekanntmachung des Hinweises auf die Patenterteilung: **03.03.2004**
(21) Anmeldenummer: 00126910.9
(22) Anmeldetag: 08.12.2000
(51) Int. Cl.: B60R 19/34

(54) **Aufpralldämpfer**
Shock absorber
Amortisseur de choc

(30) Priorität: 07.01.2000 DE 10000286
(43) Veröffentlichungstag der Anmeldung: 11.07.2001
(73) Patentinhaber: Wagon Automotive GmbH, 63857 Waldaschaff (DE)
(72) Erfinder: Beck, Manfred, 63500 Seligenstadt (DE)
(74) Vertreter: Gesthuysen, von Rohr & Eggert

(56) Entgegenhaltungen:
- WO-A-97/03865
- DE-A- 4 211 964
- DE-A- 19 807 158
- DE-A- 19 814 842
- FR-A- 2 238 869
- US-A- 4 312 430
- US-A- 4 465 301

## Beschreibung

Die Erfindung betrifft einen Aufpralldämpfer für Kraftfahrzeuge, der durch plastische Deformation bei einem Aufprall Energie aufnimmt, mit den Merkmalen des Oberbegriffs des Anspruchs 1.

Zum Schutz der Insassen eines Fahrzeuges bei einem Front- oder Heckaufprall ist es bekannt, die an den stoßstangenseitigen Querträgern angeordneten Längsträger, die ihrerseits mit der Fahrgastzelle verbunden sind, derart auszugestalten, daß sie die durch den Aufprall freiwerdende Energie durch Verformung aufnehmen. Eine derartige Verformung kann einerseits dadurch erreicht werden, daß die Längsträger gebogen sind, wobei das beim Aufprall entstehende Biegemoment zu einer Verformung des Längsträgers führen und die Verformungsstellen durch die Wahl der Querschnitte bestimmt werden. Andererseits kann eine Verformung der Längsträger in Längsrichtung auch durch Sicken herbeigeführt werden.

Aufpralldämpfer der vorstehend erwähnten Art, bei denen im wesentlichen nur die Längsträger selbst den jeweiligen Aufpralldämpfer bilden, sind relativ aufwendig herzustellen. Da die Aufpralldämpfer auch im niedrigen Geschwindigkeitsbereich (z. B. bei 10 km/h) einen Aufprall abfangen müssen, müssen die Längsträger entsprechend häufig nach Zusammenstößen ersetzt werden, was außerordentlich zeitaufwendig und teuer ist.

Aus der DE 42 39 460 A1 ist ein Aufpralldämpfer bekannt, der aus einem relativ kurzen Hohlkörper besteht und zwischen dem stoßstangenseitigen Querträger und dem dazugehörigen Längsträger des entsprechenden Fahrzeuges eingesetzt wird. Bei dem Hohlkörper handelt es sich z. B. um ein Rohrstück welches derart ausgestaltet ist, daß es bei einem Aufprall des Fahrzeuges gestaucht wird und dabei in Längsrichtung mehrere Ringfalten bildet.

Nachteilig ist bei diesem Aufpralldämpfer, daß die Stauchung des rohrförmigen Hohlkörpers nicht zum Auftreten genau definierter Ringfalten führt, so daß eine genaue geschwindigkeitsabhängige Anpassung des Aufprallverhaltens des jeweiligen Kraftfahrzeuges mit derartigen Aufpralldämpfern nicht möglich ist. Außerdem besitzt ein derartiger Aufpralldämpfer eine unerwünscht hohe erste Traglastspitze und bei nicht idealer axialer Lasteinleitung aufgrund des dann auftretenden Biegekollapsverhaltens eine stark verminderte Energieaufnahme.

Aus der DE 42 39 460 A1 sowie aus der DE 198 14 842 A1 ist ferner bekannt, zur sicheren Bildung von symmetrischer Ringfalten im Kollisionsfalle das Rohrstück in Längsrichtung vorzustauchen, so daß es in seiner Ausgangslage bereits leicht ausgebeult oder ausgebaucht ist. Versuche haben gezeigt, daß bei einem derartigen Aufpralldämpfer auch die Energieaufnahme bei nicht idealer Lasteinleitung (schräger Aufprall) besser ist als bei nicht vorgestauchten rohrförmigen Aufpralldämpfern. Allerdings ergibt sich bei dem Faltungsvorgang ein oszillierender Kraftverlauf mit relativ ausgeprägten Extremwerten.

Der aus der DE 198 14 842 A1 bekannte Aufpralldämpfer, von dem die Erfindung ausgeht, weist stirnseitig Verbindungsmittel zur Verbindung mit angrenzenden Karosserieteilen des Kraftfahrzeugs zwecks Krafteinleitung bei einem Aufprall auf (Verbindungsmittel für den Querträger einer vorderseitigen Stoßstange einerseits und den Längsträger der Fahrgastzelle andererseits). Besonders kostengünstig sind diese Verbindungsmittel dadurch realisiert, daß der Hohlkörper topfförmig und der Boden des Hohlkörpers als Flansch ausgebildet ist, wobei die dem Boden abgewandte Seite des Hohlkörpers derart nach außen gebogen ist, daß der dadurch gebildete Randbereich auch als Flansch verwendbar oder mit einer dem Hohlkörper zugeordneten Flanschplatte verbindbar ist. Die topfförmige Herstellung des Hohlkörpers läßt sich auf einfache Weise durch Tiefziehen eines Bleches erreichen, wobei nach dem Tiefziehen durch ein weiteres Formverfahren, vorzugsweise ein Innen-Hochdruckverfahren, die vorgegebenen Ausbuchtungen in den Hohlkörper eingebracht werden können.

Bei einem Aufpralldämpfer für eine Kraftfahrzeug-Lenksäule, der gleichsam als Zwischenstück der insgesamt rohrförmigen Lenksäule eingesetzt wird, ist es bekannt, die Mantelfläche dieses Einsatzstückes der Lenksäule mit einer nach außen gewölbten und die Längsachse dieses Hohlkörpers umschließenden Ausbuchtung zu versehen, die schraubenlinienförmig mit mindestens zwei die Längsachse des Hohlkörpers umschließenden Windungen verläuft (FR 2 238 869 A1). Die Besonderheiten von Aufpralldämpfem in Lenksäulen lassen eine Übertragung auf Aufpralldämpfer im Karosseriebau, insbesondere für Längsträger etc. nicht ohne weiteres zu.

Ausgehend von der DE 198 14 842 A1 liegt der Erfindung die Aufgabe zugrunde, einen Aufpralldämpfer für den Karosserieeinbau anzugeben, bei dem sich bei der Faltenbildung des rohrförmigen Hohlkörpers ein möglichst gleichmäßiger Kraftverlauf ergibt und somit geringere Kraftspitzen auftreten als bei den bekannten Aufpralldämpfern, ohne daß es dadurch zu einer Verminderung der Energieaufnahme kommt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, die zur definierten Faltenbildung vorgesehenen gewölbten Ausbuchtungen nicht als geschlossene ringförmige, sondern als schraubenförmige Bereiche mit einem relativ geringen mittleren Steigungswinkel auszugestalten. Dabei sollten mindestens zwei die Längsachse des Hohlkörpers umschließende Windungen vorgesehen sein. Die Steigung der jeweiligen schraubenförmigen Ausbuchtung sollte dabei maximal der doppelten Breite (B) der Ausbuchtung entsprechen. Vorzugsweise sollte die Steigung < 1,5 B sein.

Durch die schraubenförmige Ausgestaltung der Ausbuchtung erhält man ein gleichmäßigeres Faltenbild, d.h., die bei dem Faltungsvorgang auftretenden Kraftspitzen weisen eine geringere Amplitude auf als die bei entsprechenden ringförmigen Ausbuchtungen versehenen Aufpralldämpfern.

Überraschenderweise ergibt sich bei Verwendung der erfindungsgemäßen Aufpralldämpfer ebenfalls bei nichtaxialer Lasteinleitung eine höhere Energieaufnahme als bei vergleichbaren Aufpralldämpfern mit ringförmigen Ausbuchtungen. Dabei spielte es praktisch keine Rolle, ob der Aufpralldämpfer in bezug auf die Krafteinleitung derart positioniert war, daß der Steigungswinkel reduziert oder erhöht wird.

Als Material für den Hohlkörper hat sich als besonders vorteilhaft Stahlblech oder Aluminium mit einer ausreichenden Dehnung bewährt.

Der rohrförmige Hohlkörper des Aufpralldämpfers kann einen kreisförmigen, ovalen oder auch mehreckigen Querschnitt aufweisen.

Bei einer weiteren vorteilhaften Ausführungsform der Erfindung ist die Ausbuchtung durch mindestens drei gleichmäßig über den Umfang des Rohrkörpers verteilt angeordnete und sich in Richtung der Längsachse des Hohlkörpers erstreckende stegförmige Bereiche unterbrochen. Durch diese Maßnahme kann das gesamte Kraftniveau des sich bei einem Aufprall ergebenden Kraft-Weg-Diagrammes und damit auch die Energieabsorption des Aufpralldämpfers weiter erhöht werden.

Weitere Einzelheiten und Vorteile der Erfindung ergeben sich aus den folgenden anhand von Figuren erläuterten Ausführungsbeispielen. Es zeigen:
- Fig. 1: den Längsschnitt durch ein Ausführungsbeispiel eines zwischen dem Querträger und dem Längsträger eines Kraftfahrzeuges angeordneten erfindungsgemäßen Aufpralldämpfers und
- Fig. 2: ein Kraft-Weg-Diagramm des in Fig. 1 dargestellten erfindungsgemäßen Aufpralldämpfers bei einem Aufprall in axialer Richtung (Kurve a)) sowie eines Aufpralldämpfers lediglich mit ringförmigen Ausbuchtungen (Kurve b));

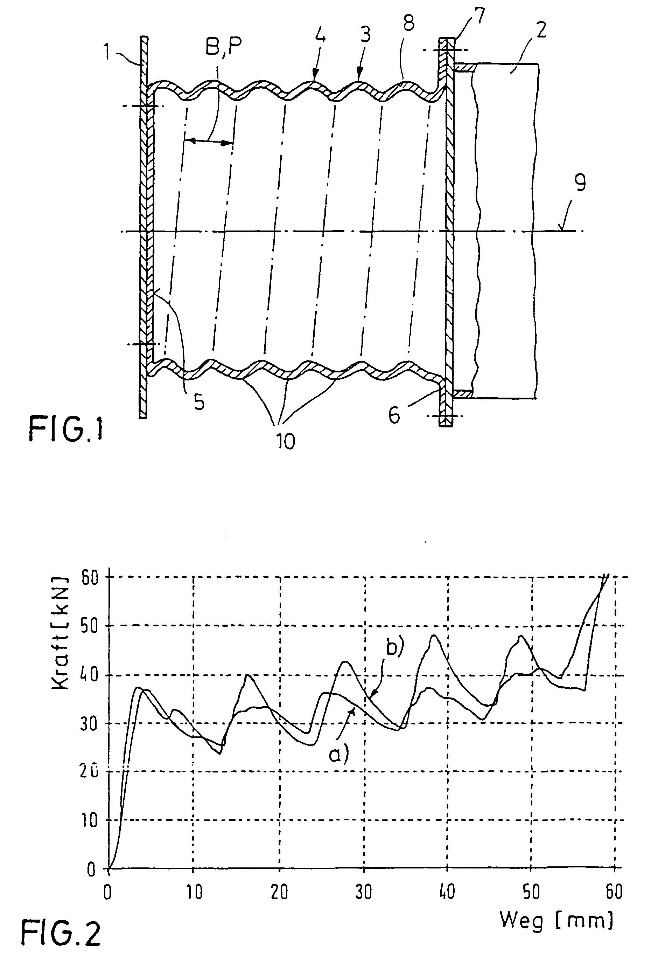

In Fig. 1 ist mit 1 der Querträger eines vorderseitigen Stoßfängers und mit 2 ein Längsträger bezeichnet, der sich bis zu der aus Übersichtlichkeitsgründen nicht dargestellten Fahrgastzelle eines Kraftfahrzeuges erstreckt. Zwischen dem Querträger 1 und dem Längsträger 2 ist ein aus einem Metallblech (mit der DIN-Bezeichnung DC 04) bestehender erfindungsgemäßer Aufpralldämpfer 3 angeordnet. Die Wandstärke des Metallbleches beträgt bei dem dargestellten Ausführungsbeispiel 1,5 mm.

Der Aufpralldämpfer 3 besteht aus einem topfförmig ausgebildeten Hohlkörper 4, dessen Boden 5 gleichzeitig als Flanschplatte zur Verbindung des Aufpralldämpfers 3 mit dem Querträger 1 dient. Die dem Boden 5 abgewandte Seite 6 des Hohlkörpers 4 ist nach außen gebogen und ist mit einer Flanschplatte 7 des Längsträgers 2 verbunden.

In die Mantelfläche 8 des rohrförmigen Hohlkörpers 4 ist eine nach außen gewölbte und die Längsachse 9 des Hohlkörpers 4 umschließende Ausbuchtung 10 eingebracht, die einen schraubenförmigen Verlauf mit fünf die Längsachse 9 umschließenden Windungen aufweist. Die Steigung P der schraubenförmigen Ausbuchtung 10 entspricht ihrer Breite B.

In Fig. 2 gibt die mit a) bezeichnete Kurve die Deformationskraft in Abhängigkeit vom Verformungsweg für den erfindungsgemäßen Aufpralldämpfer 3 wieder, während die mit b) bezeichnete Kurve den Kraftverlauf für einen entsprechenden Aufpralldämpfer mit ringförmigen Ausbuchtungen zeigt. Der Fig. ist unmittelbar entnehmbar, daß durch die schraubenförmige Ausgestaltung der Ausbuchtung 10 die durch den Faltungsvorgang entstehenden Kraftspitzen geringer werden, so daß sich ein gleichmäßigerer Faltungsverlauf als im Falle der Kurve b) ergibt.

Die Erfindung ist selbstverständlich nicht auf das vorstehend beschriebene Ausführungsbeispiel beschränkt. So muß es sich bei dem Aufpralldämpfer nicht zwingend um ein von dem Längsträger des entsprechenden Fahrzeuges separates Element handeln, sondern der erfindungsgemäße Aufpralldämpfer kann auch in einen Teilbereich des Längsträgers integriert sein. Ferner kann auch ein separater Aufpralldämpfer mit einem Längsträger verbunden sein, welcher einen entsprechenden integrierten Aufpralldämpfer umfaßt, wobei die beiden Aufpralldämpfer Energie in unterschiedlichen Geschwindigkeitsbereichen absorbieren (z. B. ist der separate Aufpralldämpfer bis zu Geschwindigkeiten von 15 km/h und der in den Längsträger integrierte Aufpralldämpfer bis zu Geschwindigkeiten von 30 km/h wirksam).

Schließlich muß der Aufpralldämpfer nicht zwingend einen runden Querschnitt besitzen, sondern kann auch einen mehreckigen, insbesondere einen rechteckigen oder quadratischen Querschnitt aufweisen. Die Herstellung derartiger Aufpralldämpfer kann dabei auf einfache Weise mit Hilfe von entsprechend vorgeprägten Blechen erfolgen, die zur Fertigung der Dämpfer geformt und dann gerügt (z. B. verschweißt) werden.

## Patentansprüche

1. Aufpralldämpfer für Kraftfahrzeuge,
mit einem aus Metall bestehenden rohrförmigen Hohlkörper (4), der durch plastische Deformation in Richtung seiner Längsachse (9) bei einem Aufprall Energie aufnimmt und dessen Mantelfläche zur Verbesserung der Faltenbildung bei einem Aufprall mindestens eine nach außen gewölbte und die Längsachse (9) des Hohlkörpers (4) umschließende Ausbuchtung (10) aufweist,
wobei der rohrförmige Hohlkörper (4) auf eine Krafteinleitung bei einem Aufprall in Richtung der Längsachse (9) des Hohlkörpers (4) ausgelegt ist,
wobei dazu der Hohlkörper (4) topfförmig und der Boden (5) des Hohlkörpers (4) als Flansch ausgebildet ist und ferner die dem Boden (5) abgewandte Seite (6) des Hohlkörpers (4) derart nach außen gebogen ist, daß der dadurch gebildete Randbereich entweder selbst als Flansch verwendbar oder mit einer dem Hohlkörper (4) zugeordneten Flanschplatte verbindbar ist,
**dadurch gekennzeichnet,**
**daß** die Ausbuchtung (10) einen schraubenförmigen Verlauf mit mindestens zwei die Längsachse (9) des Hohlkörpers (4) umschließenden Windungen aufweist und
**daß** die Steigung (P) der schraubenförmigen Ausbuchtung (10) < 2B ist, wobei B die Breite der gewölbten Ausbuchtung bedeutet.

2. Aufpralldämpfer nach Anspruch 1, **dadurch gekennzeichnet, daß** die Steigung (P) der gewölbten Ausbuchtung (10) < 1,5 B ist.

3. Aufpralldämpfer nach Anspruch 1 oder 2, **dadurch gekennzeichnet, daß** der rohrförmige Hohlkörper (4) einen kreisförmigen, ovalen oder mehreckigen Querschnitt aufweist.

4. Aufpralldämpfer nach einem der Ansprüche 1 bis 3, **dadurch gekennzeichnet, daß** die Ausbuchtung (10) durch mindestens drei gleichmäßig über den Umfang des Rohrkörpers verteilt angeordnete und sich in Richtung der Längsachse (9) des Hohlkörpers (4) erstreckende stegförmige Bereiche unterbrochen ist.

5. Aufpralldämpfer nach einem der Ansprüche 1 bis 4, **dadurch gekennzeichnet, daß** der Hohlkörper (4) aus Stahl oder Aluminium besteht.

## Claims

1. An impact absorbing device for motor vehicles,
comprising a tubular hollow body (4) consisting of metal, which absorbs energy on an impact by plastic deformation in the direction of its longitudinal axis (9) and the curved surface of which comprises at least one outwardly curved bulge (10) which surrounds the longitudinal axis (9) of the hollow body (4) in order to improve crumple zone formation on an impact,
wherein the tubular hollow body (4) is designed for the introduction of force in the direction of the longitudinal axis (9) of the hollow body (4) on an impact,
wherein for this purpose the hollow body (4) is of pot-shaped construction and the base (5) of the hollow body (4) is formed as a flange, and moreover the face (6) of the hollow body (4) facing away from the base (5) is bent outwards so that the edge region which is thereby formed can either itself be used as a flange or can be attached to a flange plate associated with the hollow body (4),
**characterised in that**
the bulge (10) extends in the form of a helix and comprises at least two turns which surround the longitudinal axis (9) of the hollow body (4), and that the pitch (P) of the helical bulge (10) is < 2B, where B denotes the width of the curved bulge.

2. An impact absorbing device according to claim 1, **characterised in that** the pitch (P) of the curved bulge (10) is < 1.5B.

3. An impact absorbing device according to claim 1 or 2, **characterised in that** the tubular hollow body (4) has a circular, oval or polygonal cross-section.

4. An impact absorbing device according to any one of claims 1 to 3, **characterised in that** the bulge (10) is interrupted by at least three rib-like regions which are uniformly distributed over the periphery of the tubular body and which extend in the direction of the longitudinal axis (9) of the hollow body (4).

5. An impact absorbing device according to any one of claims 1 to 4, **characterised in that** the hollow body (4) consists of steel or aluminium.

## Revendications

1. Amortisseur de choc pour véhicules automobiles, comprenant un corps creux (4) tubulaire en métal qui, lors d'un choc, absorbe l'énergie par déformation plastique dans la direction de son axe longitudinal (9) et dont la surface périphérique, pour favoriser la formation de plis lors d'un choc, présente au moins un bombement (10) courbe dirigé vers l'extérieur qui entoure l'axe longitudinal (9) du corps creux (4), le corps creux (4) étant conçu de manière à ce que lors d'un choc la force soit appliquée dans la direction de l'axe longitudinal (9) du corps creux (4), le corps creux (4) ayant une forme de pot, le fond (5) du corps creux (4) étant conformé en bride, et la face du corps creux (4) éloignée du fond (5) étant cintrée en direction de l'extérieur de telle sorte que la zone de bord ainsi formée puisse être utilisée comme bride en tant que telle ou être liée à une plaque formant bride associée au corps creux (4), **caractérisé en ce que** le bombement (10) présente un tracé hélicoïdal avec au moins deux spires qui entourent l'axe longitudinal (9) du corps creux (4) et **en ce que** le pas (P) du bombement (10) hélicoïdal est < 2B, B représentant la largeur du bombement courbe.

2. Amortisseur de chocs selon la revendication 1, **caractérisé en ce que** le pas (P) du bombement (10) courbe est < 1,5B.

3. Amortisseur de chocs selon la revendication 1 ou 2, **caractérisé en ce que** le corps creux (4) tubulaire présente une section transversale circulaire, ovale ou polygonale.

4. Amortisseur de chocs selon une des revendications 1 à 3, **caractérisé en ce que** le bombement (10) est interrompu par au moins trois zones en forme de cordons qui sont réparties de manière uniforme sur le pourtour du corps tubulaire et s'étendent dans la direction de l'axe longitudinal (9) du corps creux (4).

5. Amortisseur de chocs selon une des revendications 1 à 4, **caractérisé en ce que** le corps creux (4) est en métal ou en aluminium.
